# EUROPEAN PATENT SPECIFICATION

(11) **EP 2 304 862 B1**
(45) Date of publication and mention of the grant of the patent: **16.12.2015**
(21) Application number: 09784734.7
(22) Date of filing: 14.07.2009
(51) Int. Cl.: H02K 1/27, H02K 21/24

(54) **AXIAL FLUX MACHINE**
AXIALSTRÖMUNGSMASCHINE
MACHINE À FLUX AXIAL

(30) Priority: 16.07.2008 GB 0813032; 08.05.2009 GB 0907982
(43) Date of publication of application: 06.04.2011
(60) Divisional application: 13169144.6
(73) Proprietor: Cummins Generator Technologies Limited, Stamford Lincolnshire PE9 2NB (GB)
(72) Inventor: MEBARKI, Abdelslam, Stamford Lincolnshire PE9 1AW (GB); SAINI, Gurpreet, Peterborough Cambridge PE1 4SB (GB); THIAGARAJAN, Gopinath, Thelungupalayam, Stamford, Lincolnshire PE9 1LF (GB); SHANEL, Martin, Deeping St James Peterborough PE6 8QA (GB); BELL, Adrian, Oakham Rutland LE15 7DJ (GB); GRAY, Richard, Sleaford Lincolnshire NG34 0LD (GB); BROWN, Neil, Holbeach Lincolnshire PE12 8PB (GB)
(74) Representative: Williams, Michael Ian
(86) International application number: PCT/GB2009/001781
(87) International publication number: WO 2010/007385

(56) References cited:
- EP-A- 1 304 790
- EP-A- 1 418 657
- EP-A- 1 850 451
- WO-A-94/22204
- WO-A-02/056443
- WO-A-03/003546
- WO-A1-2005/022725
- WO-A2-02/089292
- DE-A1-102005 052 783
- JP-A- 2004 312 886
- JP-A- 2006 087 216
- JP-A- 2006 174 553
- JP-A- 2006 271 161
- JP-A- 2008 109 817
- JP-U- 3 040 865
- US-A1- 2004 195 932

## Description

The present invention relates to an axial flux rotating electrical machine, such as a generator or motor, and in particular to techniques for retaining permanent magnets in an axial flux machine.

Axial flux rotating electrical machines differ from conventional radial flux machines in that the magnetic flux between the rotor and the stator runs parallel to the mechanical shaft. Axial flux machines can have several advantages over radial flux machines, including compact machine construction, high power density, and a more robust structure. However various problems remain to be addressed, including magnet retention, stator retention, and cooling of the machine.

Previous techniques for retaining permanent magnets in axial flux machines include providing a retaining lip on the outer periphery of the rotor disc to counter centrifugal forces, and using adhesive to secure magnets to the rotor plate. However these techniques may be ineffective in retaining the magnets where high centrifugal forces are experienced.

WO 02/056443 discloses a spider assembly for fixing permanent magnets to a rotor disc in an axial flux machine. EP 1 503 478 discloses the use of wedge members to pin down the magnets and accommodate any tolerance. These techniques may be effective in correctly locating and retaining the magnets. However they are complex, and require a clean working environment and special preparations for rotor assembly. Furthermore, it has been found that in some cases the surface protection of the permanent magnets could become damaged, which may cause the magnetic material to degrade over time.

JP 2006-087216 discloses a rotor for an axial flux rotating electrical machine. Magnets are arranged on the surface of the rotor disc, and are fixed to the rotor disc by means of adhesive. The magnets are covered by a thin, film-like member, so that the magnets are not directly exposed to the air gap between the rotor and stator. In one embodiment, the magnets are first inserted into pockets in the member, and the member with the magnets is then placed on the rotor disc. Such a structure allows the magnet to be previously packaged and assembled, which increases productivity and, as the thin member can be constructed of a material with high tensile strength, the strength of the protection around the magnet can be further enhanced.

According to a first aspect of the present invention there is provided a rotor assembly as claimed in claim 1.

The present invention can allow manufacture of the rotor disc to be simplified, by providing a retention means into which the magnets can be inserted prior to assembly of the rotor, and which can then form part of the rotor assembly so as to retain the magnets. The present invention can also allow the magnets to be held securely without the need for separate fixtures for each magnet.

The present invention may also provide the advantage that the magnets can be easily inserted into the retention means, and the risk of damaging the surface protection of the magnets may be reduced.

At least some of the protrusions may run in a substantially radial direction, and may define partial segments. This can allow magnets of a substantially trapezium shape to be accommodated (i.e. a quadrilateral with one pair of parallel sides, which may be straight or curved, and one pair of diverging sides). This may facilitate the spacing of the magnets around a rotor disc:
In order to absorb any variations in the size of the magnets, and to assist in securing the magnets within the pockets, at least some of the protrusions may comprise deformable fins which extend inwards. The fins are preferably arranged to press against the inserted magnets.

The retention means is arranged to be mounted on the rotor of the machine with the magnets facing a back plate of the rotor. This can allow the magnets to be held firmly in place by the retention means. Preferably all of the magnets are inserted into a single retention means, although it would also be possible for two or more retention means to be provided.

Permanent magnets are often made from materials such as Neodymium Iron Boron (NdFeB). Such materials may rust or deteriorate quickly if exposed to contamination such as salty water or air. As a consequence, special coatings are often applied to the magnets in order to protect them. However it has been found that the coatings may become damaged during assembly or use of the machine. In order to address this problem, the retention means may be arranged such that, when the retention means is mounted on the rotor, the magnets are at least partially encased by the retention means and the rotor, and preferably completely encased. This can allow the magnets to be protected from mechanical damage and from contaminates such as sand or salt.

A rotor for an axial flux machine is typically disc shaped, and thus the plate may be a ring-shaped disc in order to facilitate mounting of the plate on the rotor.

The outer lip may run around the outside circumference of the plate, and may help to retain the magnets against centrifugal forces, possibly in combination with a lip arrangement of the rotor disc. The inner lip may run around the inside circumference of the plate. The lips in combination with the ribs define pockets into which the magnets are inserted, which may facilitate retention of the magnets. The lips may comprise deformable fins which extend inwards.

The protrusions protrude from the plate in a substantially axial direction (that is, parallel to the axis of the machine). The height of the protrusions may be approximately equal to the thickness of the magnets which are to be accommodated. Alternatively, corresponding protrusions may be provided on the rotor disc, and the total height of a protrusions on the plate and the corresponding protrusions on the rotor disc may be approximately equal to the thickness of the magnets. For example, the plate and the rotor disc may both comprise an outer lip, the total height of which is approximately equal to the thickness of the magnets.

The magnets may be permanent magnets, or they may be ferrous poles which become magnetized on application of an excitation field, as disclosed in WO 03/003546.

The retention means may further comprise a spacing ring for separating radially spaced magnets and/or ferrous poles. This may help to prevent flux leakage, for example between radially spaced magnets and ferrous poles, and may help in physically securing both parts.

The rotor disc may include a lip for retaining the magnets radially, and this may be provided in addition to any lip on the retaining means.

WO 03/003546 discloses an axial flux machine in which each rotor disc has two permanent magnets diametrically opposite one another on its face adjacent the stator, and two pole pieces of non-magnetised ferromagnetic material diametrically opposite one another on the same face of the rotor disc. A control winding is carried by the stator in its central aperture. The control winding can be energized to establish a control field which establishes a closed loop of magnetic flux through each juxtaposed magnet and non-magnetised pole piece and thereby opposes armature reaction.

The arrangement disclosed in WO 03/003546 can allow control of the rotor's magnetic field. However, it may suffer from some or all of the problems discussed above, including the problems associated with magnet retention.

The rotor assembly of the present invention may therefore be arranged to allow control of the rotor field in the way described in WO 03/003546. Thus, the rotor assembly may further comprise a plurality of ferrous poles which are retained on the rotor by the retention means. Preferably, each ferrous pole is adjacent to a permanent magnet. The ferrous poles may allow control of the rotor field.

The rotor assembly may comprise two rotor discs for mounting on either side of a stator, and the rotor discs may be symmetrical. By providing symmetrical rotor discs, it may be possible to reduce the cost of casting and machining the rotors, which may reduce the manufacturing cost. Furthermore, assembly of the rotor may be made easier.

Each rotor disc may comprise a castellated connecting ring, and the castellated connected rings may be aligned to create air gaps in the rotor. In addition to simplifying the rotor design, this can allow more air flow during rotation of the rotor, which may improve the cooling. Alternatively, each rotor disc may have a continuous (non-castellated) connecting ring.

The rotor may further comprise an adaptor hub for connecting the rotor to an engine. The adaptor hub may be a separate piece which is connected to one of the rotor discs. As well as simplifying the rotor design, this can allow the axial flux machine to be connected to a number of different engines simply by replacing the adaptor hub. According to another aspect of the invention there is provided a method of assembling a rotor as claimed in claim 15.

The magnet retention means discussed above may be part of an enclosed axial flux machine. Enclosed machines have various advantages, including reduced susceptibility to contamination.

Features of one aspect of the invention may be provided with any other aspect. Any of the apparatus features may be provided as method features and *vice versa.*

Preferred features of the present invention will now be described, purely by way of example, with reference to the accompanying drawings, in which:
Figure 1 shows parts of an axial flux rotating electrical machine;
Figures 2A to 2D show a magnet retention plate;
Figures 3A and 3B show a previously considered rotor design;
Figures 4A and 4B show parts of an improved rotor design;
Figure 5 shows another a retention plate;
Figure 6 shows a close-up view of the retention plate of Figure 5;
Figure 7 shows another a retention plate;
Figures 8A to 8D show various arrangements of permanent magnets and ferrous poles;
Figures 9 and 10 are linear views of a circular cross section through the centre of a rotating electrical machine; and
Figures 11A and 11B show another embodiment of a magnet retention plate.

### Overview

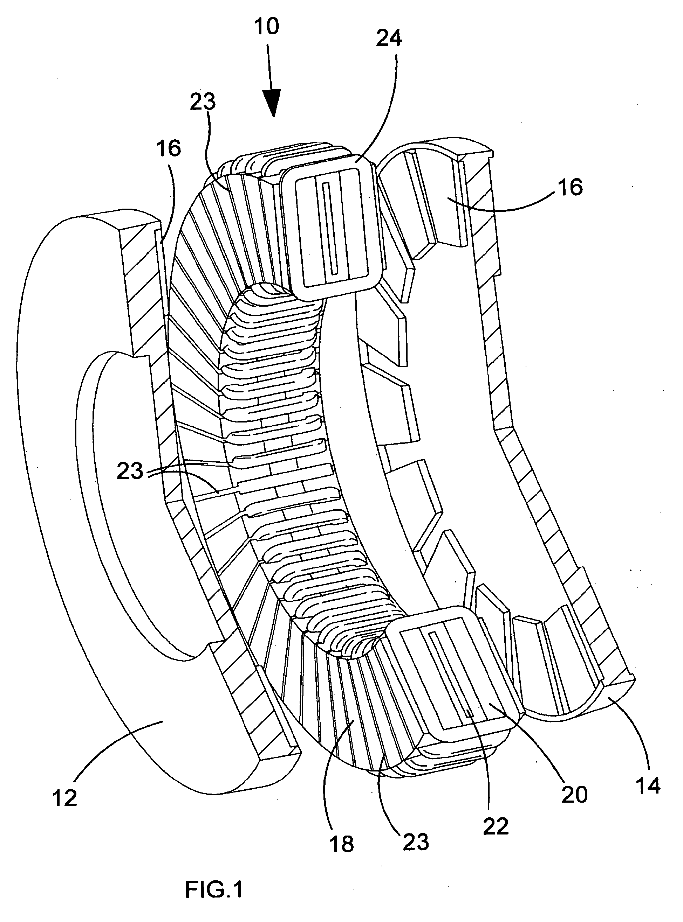

Figure 1 shows parts of an axial flux rotating electrical machine. Referring to Figure 1, the machine comprises a stator 10 sandwiched between two rotor discs 12, 14. The stator 10 consists of two slotted laminated toroids 18, 20 with a cooling jacket 22 sandwiched between the two. The two stator toroids 18, 20 may be manufactured by rolling a single strip of magnetic steel sheet. Slots 23 are formed on one side by an indexed punching machine as the rolling process takes place. Stator windings 24 are wound in the slots in the finished stator.

The rotor discs 12, 14 are mounted on a common shaft, and may be entirely ferromagnetic. Each disc carries a set of permanent magnets 16 with alternate north and south poles directed axially toward the stator. The rotor does not carry alternating flux and it can be constructed conveniently from cast iron. The permanent magnets 16 are preferably sintered Neodymium-Iron-Boron, providing a high magnetic loading, leading to a compact machine design.

The axial machine may be operated either as a generator or as a motor, or both.

### Magnet retention

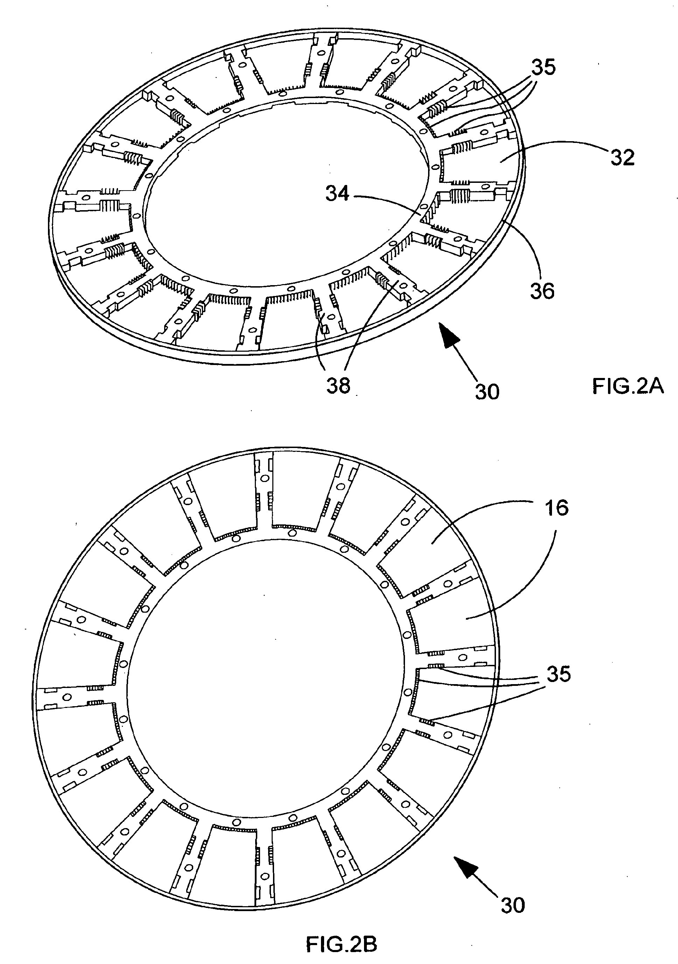

Figures 2A-2D show how a magnet retention plate may be used to retain permanent magnets on a rotor disc. Referring to Figure 2A, the magnet retention plate 30 is a ring-shaped disc having a back surface 32, an inner lip 34, an outer lip 36, and a plurality of radial ribs 38. The inner lip 34, outer lip 36 and radial ribs 38 protrude from the back surface 32 in an axial direction. The inner lip 34 and outer lip 36 are both circular, and are located on the inside edge and outside edge of the retention plate respectively.

The back surface 32, inner lip 34, outer lip 36, and radial ribs 38 of the magnet retention plate define a plurality of pockets, each of which is designed to accommodate a permanent magnet. During assembly, the permanent magnets are pushed into the pockets, and are held in the pockets with an interference fit. The radial ribs 38, inner lip 34 and outer lip 36 may include deformable fins 35, or small projections into the pocket, to allow for any tolerance variation and to ensure that the magnets are held in place. Figure 2B shows a retention plate into which permanent magnets 16 have been inserted.

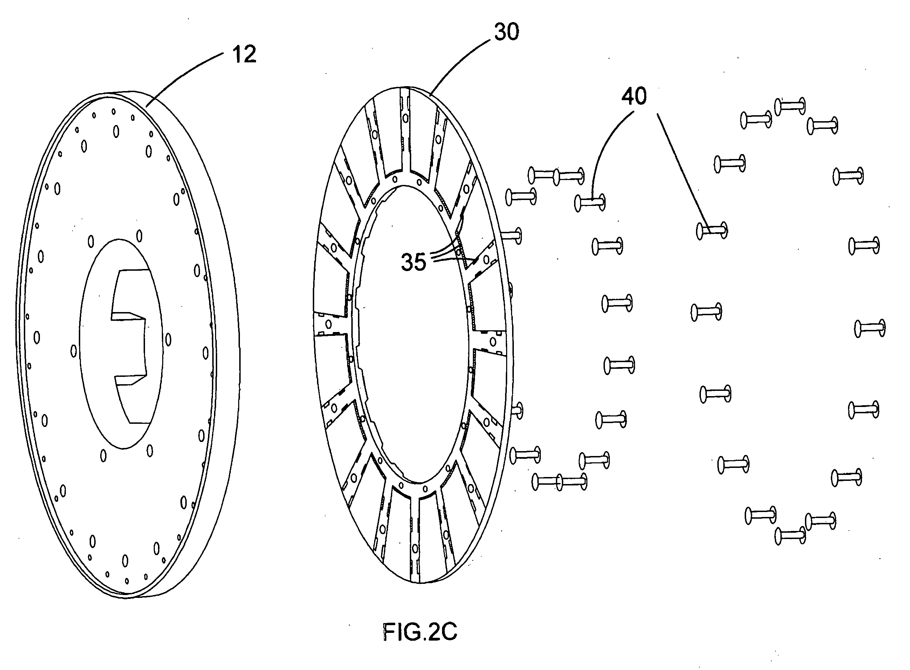

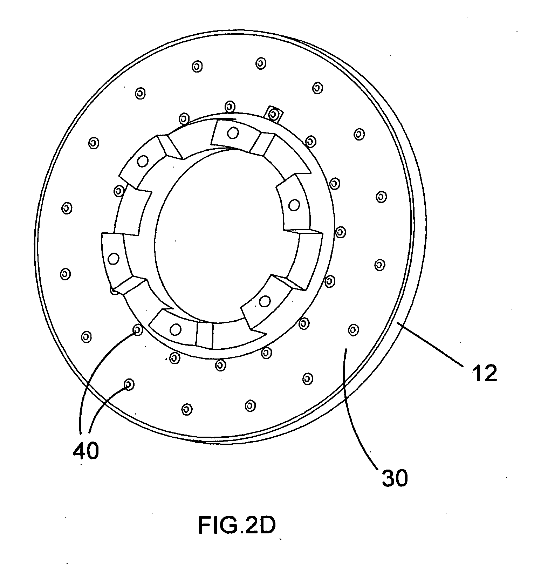

Once the permanent magnets have been inserted into the magnet retention plate, the plate is offered to the rotor disc, such as rotor disc 12, and fixed to it as shown in Figure 2C. The retention plate may be fixed to the rotor disc by means of rivets 40, or any other convenient means, such as bolts or screws. Figure 2D shows the retention plate 30 mounted on the rotor disc 12, and fixed in place with rivets 40. The magnets are completely enclosed, and thus are protected from mechanical damage and from any contamination such as sand or salt which may find its way into the machine.

The retention plate 30 may be formed from a metal such as spring steel, or from a resiliently deformable plastics material such as nylon, or any other suitable material.

The retention plate shown in Figures 2A-2D can allow a rotor to be assembled using fewer components than previously known retention techniques, which can reduce the assembly time. The magnets and the retention plate can be offered to the rotor disc as a complete unit, which can facilitate assembly. Furthermore, there is no need to glue the magnets onto the rotor. Any tolerance on the magnets can be absorbed by deformable fins on the retention plate. The fins may support the magnets against torsional forces. Once assembled, the magnets are enclosed and thus mechanically protected against damage.

The retention plate 30 is ideally formed from a material which is non-magnetic, with permeability similar to that of air. In the assembled machine, the back surface 32 effectively replaces part of the air gap between the rotor and stator, and thus by having permeability similar to that of air, the retention means can behave in a similar way electromagnetically to the air gap. This can avoid the need to redesign the machine significantly, and can avoid flux short circuits which might otherwise bypass the air gap.

It is also desirable for the retention plate to be formed from a material which is nonconducting electrically, in order to avoid eddy currents. Ideally, the material would also be thermally conductive, in order to assist with cooling. A suitable material for the retention plate has been found to be reinforced composite plastic, which can be manufactured using a high pressure injection moulding process.

It has been found that the use of the retention plate can allow the tolerances of the air gap to be reduced. This can allow the physical clearance of the air gap to be reduced, which can allow the effective air gap formed by the back surface of the retention plate and the actual air gap to be similar electromagnetically to the case where a retention plate is not used.

Referring back to Figure 1, it can be seen that the stator 10 is at the centre of the machine, and therefore is likely to experience the highest temperatures. In the arrangement of Figure 1, a cooling jacket 22 is provided in order to cool the stator.

In the arrangement of Figure 1, the stator 10 is formed from two parts 18, 20 with the cooling jacket 22 sandwiched between the two. The cooling jacket is disc-shaped, and is hollow to allow a cooling fluid to be circulated through it. Inlet and outlet pipes (not shown in Figure 1) are provided to allow the cooling fluid to enter and exit the cooling jacket. Any type of cooling fluid may be used, such as engine coolant. The cooling jacket 22 is manufactured from a strong, non-magnetic, heat-conducting material such as aluminium. In one embodiment the cooling jacket is formed from two discs of aluminium which are welded together.

The cooling jacket 22 cools the machine at what is otherwise likely to be the hottest part, namely the centre of the machine. As a consequence it may be possible to rely on the cooling jacket to cool the whole machine. In this case, the machine may be manufactured as a totally enclosed unit.

Conventional rotating electrical machines suffer from the problem that contaminants such as sand and salt may enter the machine, reducing the machine's durability. With permanent magnet machines, the problem of contamination is even more serious, because contaminants can react with the magnets, causing them to rust and deteriorate. A totally enclosed unit has the advantage of being less susceptible to contamination, which may increase the machine's durability. A totally enclosed machine may also be packaged more effectively, as no allowance need be made for air cooling. Furthermore, a totally enclosed unit may be safer, as total containment of rotating components is possible. In addition, a totally enclosed unit may emit less electromagnetic interference, saving the expense of EMI screening.

### Rotor design

As discussed above, the axial machine described above may be connected to an engine in order to be driven as a generator. An advantage of the axial machine configuration is that the machine can be readily integrated with the engine in order to produce a single unit. For example, the axial machine may replace the engine flywheel, and may sit inside the flywheel housing. This may result in a more compact design with fewer components.

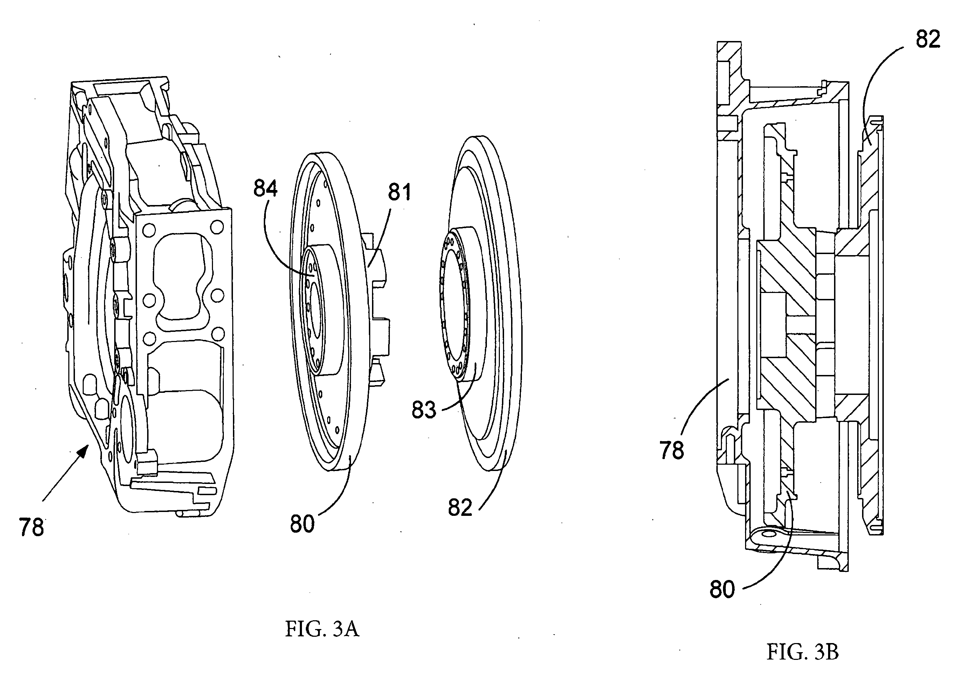

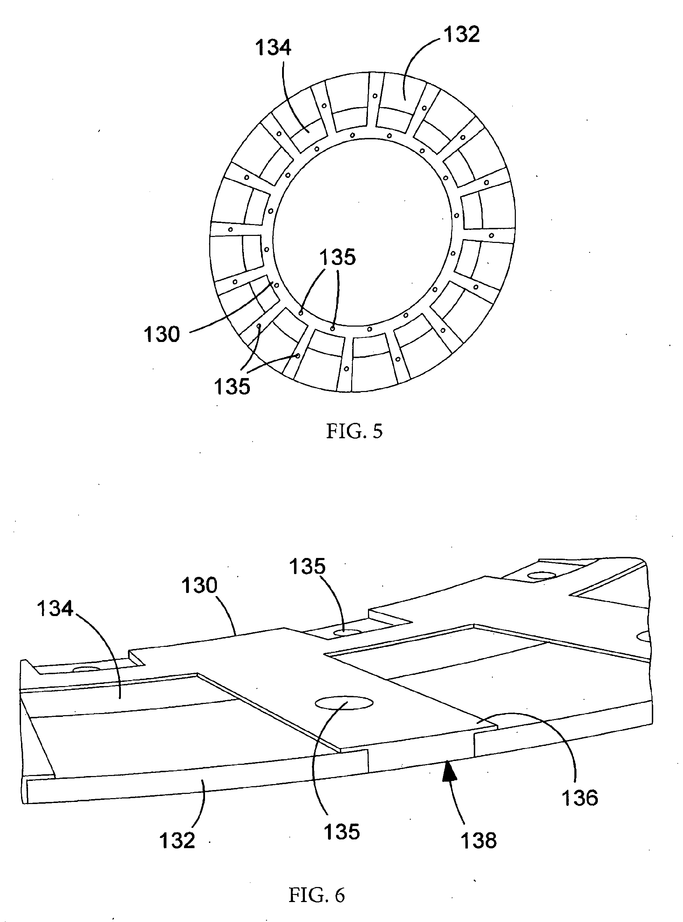

Figures 3A and 3B show a previously considered rotor design for integration of the axial machine into an engine flywheel housing. Figure 3A shows an exploded view of a flywheel housing 78 and the rotor. Referring to Figure 3A, the rotor consists of a driven-end rotor disc 80 and a non-driven-end rotor disc 82. Each rotor disc has a connecting ring 81, 83 for connecting the two discs together. The connecting ring 81 on the driven-end rotor disc 80 is castellated, while the connecting ring 83 on the non-driven-end rotor disc 82 is non-castellated. A crank bolting face 84 is provided on the driven-end rotor disc 80 for connecting the rotor to the engine crank shaft. Figure 6B shows the assembled rotor inside the flywheel housing.

A problem with the rotor design shown in Figures 3A and 3B is that the driven-end and non-driven-end rotor discs have different dimensions, so that casting and machining is expensive. Another problem is that the rotor is only designed to fit onto a particular type of engine. In practice, it may be desirable to fit the machine to a number of different engines. For example, a number of different SAE (Society of Automobile Engineers) flywheel housing types are defined, and it may be desirable to fit the machine to any number of these. This requires either a large inventory of different machines for different engines, or replacement of the rotor for fitting to different engines, neither of which is desirable. A further problem is that there is little air flow during rotation of the rotors.

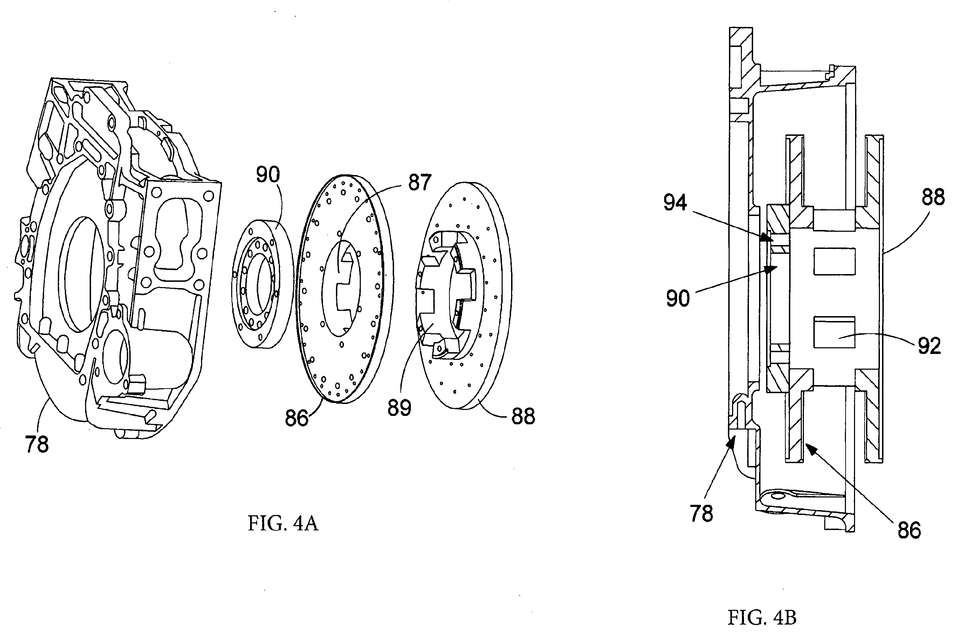

Figures 4A and 4B show parts of an improved rotor design. Figure 4A shows an exploded view of the rotor and flywheel housing. The rotor comprises a driven-end rotor disc 86, a non-driven-end rotor disc 88, and an adaptor hub 90. Each rotor disc has a connecting ring 87, 89 for connecting the two discs together. Figure 4B shows the assembled rotor inside the flywheel housing.

In the arrangement of Figures 4A and 4B, the driven-end rotor disc 86 and non-driven-end rotor disc 88 are symmetrical, and each is formed from a similar or identical part. Since the two parts are symmetrical, the cost of casting and machining the two parts can be reduced, which may reduce the manufacturing cost.

In contrast to the arrangement shown in Figure 3A, in the arrangement of Figure 4A and 4B each connecting ring 87, 89 is castellated. In the assembled rotor the castellations are aligned to create air gaps 92, as shown in Figure 4B. This can allow more air flow between the stator and the magnets during rotation of the rotor, which may improve the rotor cooling. Alternatively, both connecting rings may be non-castellated in a similar way to the non-driven-end rotor disc 82 shown in Figure 3A.

The adaptor hub 90 is used to connect the rotor to the engine crank shaft. The adaptor hub 90 is a separate piece which is connected to the driven-end rotor disc. The adaptor hub is designed in such a way that by varying the hub pitch circle diameter 94 it is possible to connect the hub to engines of a different size. This can allow the axial flux machine to be connected to a number of different engines simply by replacing the adaptor hub.

Advantages of the rotor design shown in Figures 4A and 4B include easy assembly, more air flow during rotation due to the castellation feature on the non-drive-end rotor disc, the ability to maintain the tolerance on the rotors more accurately, lower manufacturing costs, and less inventory management.

### Field control

Figure 5 shows another example of a magnet retention plate. The magnet retention plate is in the form of a semi-closed retention spider 130. In Figure 5, a plurality of permanent magnets 132, and a plurality of ferrous poles 134 are located within the retention plate. For clarity, the rotor itself and fasteners such as bolts, washers and so forth are not illustrated.

In the arrangement of Figure 5, the permanent magnets 132 are arranged around the retention plate 130 in a north-south arrangement (i.e. with the poles of alternate magnets facing in the opposite direction). A ferrous pole 134 is positioned adjacent to each permanent magnet. The combination of a permanent magnet 132 and a ferrous pole 134 forms a main magnetic pole.

The ferrous poles 134 are formed from a material of high permeability, and are non-magnetised. A suitable material may be a ferromagnetic metal such as steel or iron, although other materials such as nickel, cobalt and manganese, or their compounds, could be used instead. Alternatively, the ferrous poles may be formed from a powder of ferromagnetic metal, such as iron, embedded in resin.

During assembly of the rotor, the permanent magnets 132 and ferrous poles 134 are pushed into the retention plate, and are held in place by an interference fit. The retention plate may include deformable fins which project inwards towards the magnets and ferrous poles, to allow for any tolerance variation and to ensure that the magnets and ferrous poles are held in place. Once the magnets and ferrous poles have been inserted into the retention plate, the plate is offered to the rotor disc as a complete unit. Holes 135 are provided in the retention plate 130 for securing it to the rotor. The retention plate may be fixed to the rotor disc by means of rivets or any other convenient means, such as bolts or screws. The rotor disc is provided with a lip around its outside circumference in order to retain the magnets and ferrous poles radially in the assembled rotor.

Figure 6 shows a close-up view of the semi-closed magnet retention plate 130. Referring to Figure 6, the retention plate comprises a back surface 136 and protrusions 138. The protrusions 138 define pockets into which the magnets 132 and ferrous poles 134 can be inserted. In the assembled rotor, the back surface 136 retains the magnets axially, while the protrusions 138 retain the magnets tangentially.

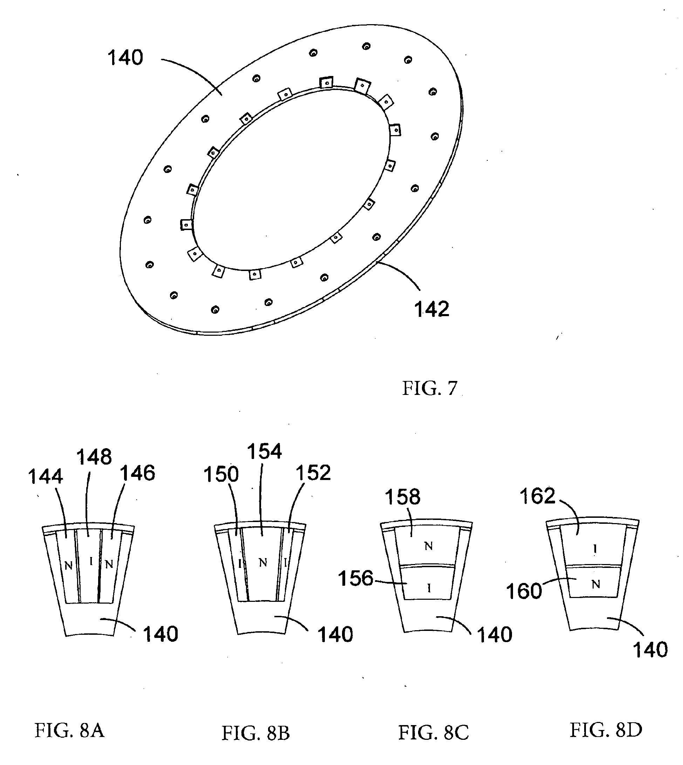

Figure 7 shows another example of a retention plate. In the arrangement of Figure 7, the back surface 140 of the retention plate is closed. Permanent magnets 142 are located in the retention plate. In the view of Figure 7, ferrous poles are hidden under the closed rear surface of the retention plate 140.

In the arrangement of Figures 5 to 7, the ferrous poles provide a field weakening capability through a reluctance torque. This is achieved by passing a control current through a control winding, in the way described in WO 03/003546. The arrangement of Figures 5 to 7 can therefore allow control of the rotor field.

If the electrical machine is used as a motor or in the power train of a vehicle, the speed is constrained by the maximum speed of the transmission, and the maximum-to-nominal speed ratio is selected for optimal transmission speed and thermal performance. Above the nominal motor speed, field weakening is applied to achieve constant-power operation. This field weakening allows the constant power region to be extended at high speed, and while keeping the terminal voltage at rated value. It can also assist the main torque at low speeds. This can be achieved by controlling appropriately the d-axis current component of the d-q vector control technique. Therefore the rotor discs are provided with saliencies and the inductance in the q-direction is different than the inductance in the d-direction.

Figures 8A to 8D show various ways in which a permanent magnet and ferrous pole may be arranged to form a main magnetic pole. In Figure 8A, two permanent magnets 144, 146 are arranged either side of ferrous pole 148 in a circumferential direction. In the arrangement of Figure 8B, two ferrous poles 150, 152 are arranged either side of a permanent magnet 154. In the arrangement of Figure 8C a ferrous pole 156 is located radially inwards of a permanent magnet 158, while in the arrangement of Figure 8D a permanent magnet 160 is located radially inward of a ferrous pole 162. In each case the combination of one or more permanent magnet and one or more ferrous pole forms a main magnetic pole which can achieve field weakening by passing the appropriate current through a control winding.

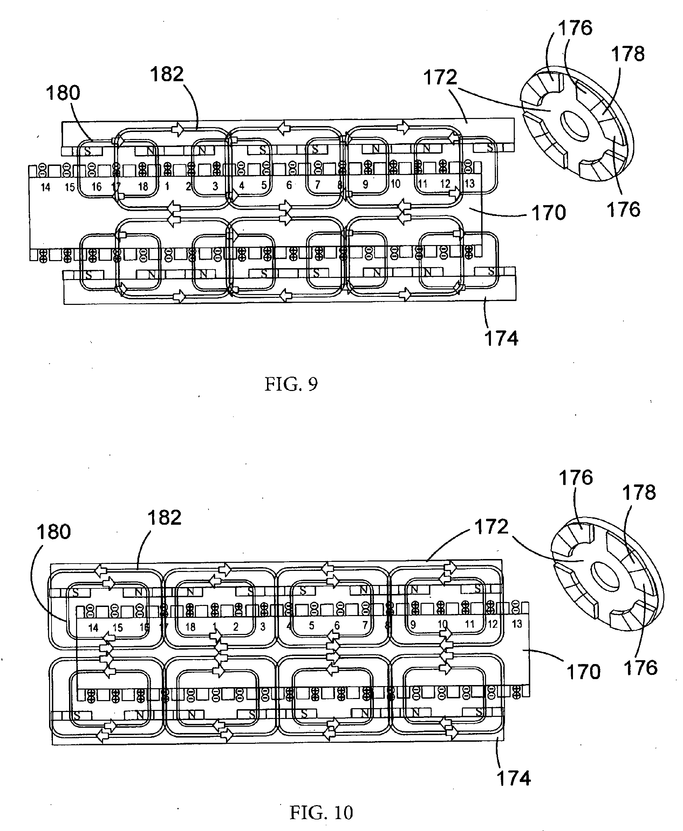

Figures 9 and 10 are linear views of a circular cross section through the centre of a rotating electrical machine. Referring to Figures 9 and 10, the machine comprises a stator 170, a first rotor plate 172 and a second rotor plate 174. Permanent magnets 176 and ferrous poles 178 are arranged around the rotor plates in the way shown in Figure 8A. A magnetic flux 180 is established by the permanent magnets 176. A control winding (not shown) is also provided in the stator in order to establish an armature current flux 182 through the ferrous poles. In Figure 9 the armature current flux 182 is in quadrature with the magnetic flux 180, while in Figure 10 the armature current flux 182 opposes the magnetic flux 180.

As an example, if the electrical machine is used as motor or in the power train of a vehicle, the machine may be operated at constant Volts/Hertz operation up to the base speed (say 20% of the maximum speed) to provide the required constant torque. In this range, vector control may be used to set the flux produced by the armature current in the q-direction to be in quadrature with the flux generated by the magnet, as shown in Figure 9. In this case the armature current is in phase with the back emf voltage of the motor. This can allow optimum torque production to be achieved.

Above the base speed and up to the maximum speed, the vector control technique can be used to weaken the air-gap flux by controlling the amount of flux produced by the armature current in the d-direction, as depicted in Figure 10. This can allow constant voltage operation to be maintained up to the maximum speed.

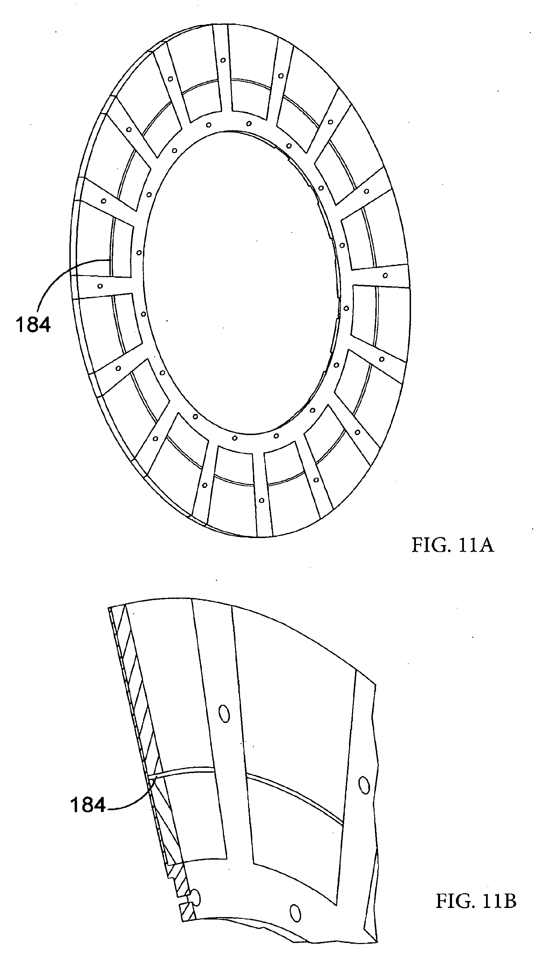

Figures 11A and 11B show another example of a magnet retention plate. In this example, a spacing ring 184 is included as an integrated feature of the magnet retention plate. This helps to prevent leakage flux from the permanent magnets from crossing to the ferrous poles without linking with the windings of the stator.

In the above description various different embodiments and examples of an axial flux rotating electrical machine have been described. It will be appreciated that the various embodiments and examples are complementary, and that features of one embodiment or example may be provided with any of the other embodiments or examples.

## Claims

1. A rotor assembly for an axial flux rotating electrical machine, the rotor assembly comprising:
a rotor disc (12, 14);
a plurality of permanent magnets (16); and
retention means (30) for retaining the magnets (16) on the rotor disc,
the retention means comprising a back plate and a plurality of protrusions in the form of ribs (38), an inner lip (34) and an outer lip (36) which protrude from the back plate in an axial direction,
the ribs, inner lip and outer lip defining a plurality of pockets into which the magnets (16) are inserted and held with an interference fit,
wherein the retention means (30) with inserted magnets (16) is fixed to the rotor disc with the magnets facing the rotor disc such that, in operation of the rotating electrical machine, the magnets (16) are retained axially, tangentially and radially by the retention means (30).

2. A rotor assembly according to claim 1, wherein the retention means (30) is formed from metal or a resiliently deformable plastics material.

3. A rotor assembly according to claim 1 or 2, wherein the ribs (38) run in a substantially radial direction.

4. A rotor assembly according to any of the preceding claims, wherein the protrusions (34, 36, 38) include a plurality of projections (35) into the pockets to allow for tolerance variation and to ensure that the magnets (16) are held in place.

5. A rotor assembly according to claim 4, wherein the projections are in the form of deformable fins (35) which extend inwards.

6. A rotor assembly according to any of the preceding claims, wherein the retention means (30) is arranged such that, when it is mounted on the rotor disc (12, 14), the magnets (16) are at least partially encased by the retention means and the rotor disc.

7. A rotor assembly according to any of the preceding claims, wherein the back plate is a ring-shaped disc.

8. A rotor assembly according to any of the preceding claims, wherein the outer lip (36) is arranged to retain the magnets against centrifugal forces.

9. A rotor assembly according to any of the preceding claims, further comprising a spacing ring (184) for separating radially spaced magnets and/or ferrous poles.

10. A rotor assembly according to any of the preceding claims, wherein the ribs comprise holes (135) for securing the retention means to the rotor disc.

11. A rotor assembly according to any of the preceding claims, wherein the retention means (30) allows the magnets (16) to be secured to the rotor disc (12, 14) without the need for adhesives.

12. A rotor assembly according to any of the preceding claims, wherein the retention means (30) is fixed to the rotor disc by rivets (40), bolts or screws.

13. A rotor assembly according to any of the preceding claims, further comprising a plurality of ferrous poles (134) which are retained on the rotor disc (12, 14) by the retention means (30), wherein the ferrous poles allow control of the rotor field.

14. A rotor assembly according to any of the preceding claims, the rotor assembly comprising two rotor discs (12, 14) for mounting on either side of a stator (10), wherein the rotor discs are symmetrical, and each rotor disc preferably comprises a castellated connecting ring, wherein the castellated connected rings are preferably aligned to create air gaps in the rotor.

15. A method of assembling a rotor for an axial flux rotating electrical machine, the method comprising:
inserting magnets (16) into pockets in a retention means (30), the retention means comprising a back plate (32) and a plurality of protrusions (34, 36, 38) in the form of ribs (38), an inner lip (34) and an outer lip (36) which protrude from the back plate in an axial direction, and which define the pockets into which the magnets (16) are inserted and held with an interference fit;
offering the retention means (30) with inserted magnets (16) to a rotor disc (12, 14) with the magnets facing the rotor disc; and
fixing the retention means (30) with the inserted magnets (16) to the rotor disc (12, 14), such that, in operation of the rotating electrical machine, the magnets are retained axially, tangentially and radially by the retention means.

## Patentansprüche

1. Rotorbaugruppe für eine elektrische Axialfluss-Rotationsmaschine, wobei die Rotorbaugruppe aufweist:
eine Rotorscheibe (12, 14);
eine Mehrzahl von Permanentmagneten (16); und
Rückhalteeinrichtungen (30), um die Magnete (16) auf der Rotorscheibe zurückzuhalten,
wobei die Rückhalteeinrichtung eine Rückenplatte und eine Mehrzahl von Vorsprüngen in Form von Rippen (38), eine innere Lippe (34) und eine äußere Lippe (36) aufweist, die von der Rückenplatte in axialer Richtung vorstehen,
wobei die Rippen, die innere Lippe und die äußere Lippe eine Mehrzahl von Taschen definieren, in welche die Magnete (16) eingesetzt sind und mit einer Presspassung gehalten werden;
wobei die Rückhalteeinrichtung (30) mit eingesetzten Magneten (16) bei zur Rotorscheibe weisenden Magneten an der Rotorscheibe befestigt ist, derart, dass bei Betrieb der elektrischen Rotationsmaschine die Magnete (16) axial, tangential und radial durch die Rückhalteeinrichtung (30) zurückgehalten werden.

2. Rotorbaugruppe nach Anspruch 1, wobei die Rückhalteinrichtung (30) aus Metall oder einem elastisch verformbaren Kunststoffmaterial ausgebildet ist.

3. Rotorbaugruppe nach Anspruch 1 oder 2, wobei die Rippen (38) in im Wesentlichen radialer Richtung verlaufen.

4. Rotorbaugruppe nach einem der vorhergehenden Ansprüche, wobei die Vorsprünge (34, 36, 38) eine Mehrzahl von in die Taschen hineingehenden Vorsprüngen (35) beinhalten, um Toleranzschwankungen zu berücksichtigen und um zu gewährleisten, dass die Magnete (16) an ihrem Platz gehalten werden.

5. Rotorbaugruppe nach Anspruch 4, wobei die Vorsprünge in Form von verformbaren Lamellen (35) vorliegen, die sich nach innen erstrecken.

6. Rotorbaugruppe nach einem der vorhergehenden Ansprüche, wobei die Rückhalteeinrichtung (30) derart angeordnet ist, dass, wenn sie an der Rotorscheibe (12, 14) montiert ist, die Magnete (16) durch die Rückhalteeinrichtung und die Rotorscheibe zumindest teilweise eingekapselt sind.

7. Rotorbaugruppe nach einem der vorhergehenden Ansprüche, wobei die Rückenplatte eine ringförmige Scheibe ist.

8. Rotorbaugruppe nach einem der vorhergehenden Ansprüche, wobei die äußere Lippe (36) ausgebildet ist, um die Magnete entgegen Zentrifugalkräften zurückzuhalten.

9. Rotorbaugruppe nach einem der vorhergehenden Ansprüche, weiter aufweisend einen Distanzring (184), um mit radialem Abstand angeordnete Magnete und/oder Eisenpole zu separieren.

10. Rotorbaugruppe nach einem der vorhergehenden Ansprüche, wobei die Rippen Löcher (135) zum Befestigen der Rückhalteeinrichtung an der Rotorscheibe aufweisen.

11. Rotorbaugruppe nach einem der vorhergehenden Ansprüche, wobei die Rückhalteeinrichtung (30) ermöglicht, dass die Magnete (16) an der Rotorscheibe (12, 14) befestigt werden, ohne dass dazu Klebstoff benötigt wird.

12. Rotorbaugruppe nach einem der vorhergehenden Ansprüche, wobei die Rückhalteeinrichtung (30) an der Motorscheibe mittels Nieten (40), Bolzen oder Schrauben befestigt wird.

13. Rotorbaugruppe nach einem der vorhergehenden Ansprüche, weiter aufweisend eine Mehrzahl von Eisenpolen (134), die an der Rotorscheibe (12, 14) mittels der Rückhalteeinrichtung (30) zurückgehalten werden, wobei die Eisenpole ein Steuern des Rotorfeldes ermöglichen.

14. Rotorbaugruppe nach einem der vorhergehenden Ansprüche, wobei die Rotorbaugruppe zwei Rotorscheiben (12, 14) für ein Anbringen zu beiden Seiten eines Stators (10) aufweist, wobei die Rotorscheiben symmetrisch sind und wobei jede Rotorscheibe vorzugsweise einen kronenförmigen Verbindungsring aufweist, wobei die kronenförmigen Verbindungsringe vorzugsweise zueinander ausgerichtet sind, um Luftspalte in dem Rotor zu erzeugen.

15. Verfahren zum Zusammenbau eines Rotors für eine elektrische Axialfluss-Rotationsmaschine, wobei das Verfahren aufweist:
Einsetzen von Magneten (16) in Taschen in einer Rückhalteeinrichtung (30), wobei die Rückhalteeinrichtung eine Rückenplatte (32) und eine Mehrzahl von Vorsprüngen (34, 36, 38) in Form von Rippen (38), eine innere Lippe (34) und eine äußere Lippe (36) aufweist, die von der Rückenplatte in axialer Richtung vorstehen und die die Taschen definieren, in welche die Magnete (16) eingesetzt werden und mit einer Presspassung gehalten werden;
Ansetzen der Rückhalteeinrichtung (30) mit eingesetzten Magneten (16) an eine Rotorscheibe (12, 14), wobei die Magnete zur Rotorscheibe weisen; und
Befestigen der Rückhalteinrichtung (30) mit den eingesetzten Magneten (16) an der Rotorscheibe (12, 14), derart, dass bei Betrieb der elektrischen Rotationsmaschine die Magnete durch die Rückhalteeinrichtung in axialer, tangentialer und radialer Richtung zurückgehalten werden.

## Revendications

1. Ensemble rotor pour une machine électrique rotative à flux axial, l'ensemble rotor comprenant
un disque rotor (12, 14),
une pluralité d'aimants permanents (16) et
des moyens de retenue (30) pour retenir les aimants (16) sur le disque rotor,
les moyens de retenue comprenant une plaque arrière et une pluralité de saillies sous la forme de nervures (38), d'une lèvre intérieure (34) et d'une lèvre extérieure (36) qui dépassent de la plaque arrière dans une direction axiale,
les nervures, la lèvre intérieure et la lèvre extérieure définissant une pluralité de poches dans lesquelles les aimants (16) sont insérés et maintenus avec un ajustement serré,
**caractérisé en ce que** les moyens de retenue (30) avec les aimants (16) insérés sont fixés sur le disque rotor avec les aimants en regard du disque rotor de façon que, pendant le fonctionnement de la machine électrique rotative, les aimants (16) soient retenus axialement, tangentiellement et radialement par les moyens de retenue (30).

2. Ensemble rotor selon la revendication 1, **caractérisé en ce que** les moyens de retenue (30) sont formés en métal ou en une matière plastique élastiquement déformable.

3. Ensemble rotor selon la revendication 1 ou 2, **caractérisé en ce que** les nervures (38) s'étendent dans une direction essentiellement radiale.

4. Ensemble rotor selon l'une des revendications précédentes, **caractérisé en ce que** les saillies (34, 36, 38) comprennent une pluralité de protubérances (35) dans les poches afin de permettre une variation de tolérances et afin d'assurer que les aimants (16) soient maintenus en place.

5. Ensemble rotor selon la revendication 4, **caractérisé en ce que** les protubérances ont la forme d'ailerons (35) déformables s'étendant vers l'intérieur.

6. Ensemble rotor selon l'une quelconque des revendications précédentes, **caractérisé en ce que** les moyens de retenus (30) sont agencés de façon que, lorsqu'ils sont montés sur le disque rotor (12, 14), les aimants (16) soient au moins partiellement encastrés par les moyens de retenue et le disque rotor.

7. Ensemble rotor selon l'une quelconque des revendications précédentes, **caractérisé en ce que** la plaque arrière est un disque de forme annulaire.

8. Ensemble rotor selon l'une quelconque des revendications précédentes, **caractérisé en ce que** la lèvre extérieure (36) est agencée de façon à retenir les aimants contre les forces centrifuges.

9. Ensemble rotor selon l'une quelconque des revendications précédentes, comprenant en outre un anneau d'épaisseur (184) pour séparer des aimants radialement espacés et/ou des pôles ferreux.

10. Ensemble rotor selon l'une quelconque des revendications précédentes, **caractérisé en ce que** les nervures comprennent des trous (135) pour solidariser les moyens de retenue au disque rotor.

11. Ensemble rotor selon l'une quelconque des revendications précédentes, **caractérisé en ce que** les moyens de retenue (30) permettent aux aimants (16) d'être fixés au disque rotor (12, 14) sans adhésifs.

12. Ensemble rotor selon l'une quelconque des revendications précédentes, **caractérisé en ce que** les moyens de retenue (30) sont fixés au disque rotor par des rivets (40), boulons ou vis.

13. Ensemble rotor selon l'une quelconque des revendications précédentes, comprenant en outre une pluralité de pôles ferreux (134) qui sont retenus sur le disque rotor (12, 14) par les moyens de retenue (30), **caractérisé en ce que** les pôles ferreux permettent une commande du champ du rotor.

14. Ensemble rotor selon l'une quelconque des revendications précédentes, l'ensemble rotor comprenant deux disques rotor (12, 14) pour être montés de part et d'autre d'un stator (10), **caractérisé en ce que** les disques rotor sont symétriques et chaque rotor comprend de préférence un anneau de connexion crénelé, les anneaux de connexion crénelés étant de préférence alignés pour créer des lames d'air dans le rotor.

15. Procédé d'assemblage d'un rotor pour une machine électrique rotative à flux axial, le procédé comprenant
insérer des aimants (16) dans des poches dans des moyens de retenue (30), les moyens de retenue comprenant une plaque arrière (32) et une pluralité de saillies (34, 36, 38) sous la forme de nervures (38), d'une lèvre intérieure (34) et d'une lèvre extérieure (36) qui dépassent de la plaque arrière dans une direction axiale et qui définissent des poches dans lesquelles les aimants (16) sont insérés et maintenus avec un ajustement serré,
mettre les moyens de retenue (30) avec les aimants (16) insérés devant un disque rotor (12, 14) avec les aimants en regard du disque rotor, et
fixer les moyens de retenue (30) avec les aimants (16) insérés sur le disque rotor (12, 14) de façon que, pendant le fonctionnement de la machine électrique rotative, les aimants soient retenus axialement, tangentiellement et radialement par les moyens de retenue.
